# EUROPEAN PATENT APPLICATION

(11) **EP 1 675 076 A1**
(43) Date of publication of application: **28.06.2006**
(21) Application number: 04425932.3
(22) Date of filing: 21.12.2004
(51) Int. Cl.: G07F 7/10, G07C 9/00

(54) **System and related kit for personal authentication and managing data in integrated networks**

(71) Applicant: Italtel S.p.a., 20019 Settimo Milanese (IT)
(72) Inventor: Catania, Giuseppe, 20020 Arese (MI) (IT); Melen, Riccardo, Segrate (MI) (IT)
(74) Representative: Capasso, Olga

(57) **Abstract**

A system and a kit are described that allow integration of personal identification, of detection of presences, of management of personal data and of a terminal personalization. It is also described a method of recognition of a user and personalization of a terminal for authenticated communications.

## Description

### State of the Art

Evolution of technology has allowed technical possibility and economic convenience of realization of integrated networks capable of supporting voice, video and data services, also known as "New Generation Networks". They are based on IP (Internet Protocol) technology with great application potentials, also as a substitution of traditional networks, circuit type, for distribution of telephonic services. Up to-day in Italy we have providers who offer integrated services on IP access network (Fastweb), and traditional operators (Telecom Italia) are quickly introducing new technology in their own networks, starting from structure of already existing networks.

Establishment of new generation networks does not only imply an innovation in techniques of information transport, which becomes package type, but also allows to realize more easily deep innovations in the logic by which services are supplied. In this respect, a characteristic among the most important ones is the possibility to free the characterization of services from physical line and from access terminal on which they are supplied, by binding it, instead, to user identity.

This concept has already been partly realized since years in the domain of cellular telephony, in which services are connected to a "SIM card", which represents the user. Notwithstanding, this SIM is not centred on the user because, first of all, it is connected to a single provider and then to a personal identity by means of a PIN, therefore with a system not fully safe. Besides this, SIM is generally used with a single terminal and displacement from one terminal to another is not simple and immediate.

Another line of evolution in the use of networks is made up by the growing use of Internet, for making financial transactions of various types. Since long time the central problem for the establishment of this type of applications is about security: however if technical mechanisms for protection of transactions and data secrecy are more than satisfying, the problem of personal identification is not yet fully solved.

The most common approach to personal authentication requires the use of a password and PIN, but it presents not small problems of distribution and especially of management by users, who find themselves to face the problem to remember and to preserve in a safe place a not small quantity of enabling codes of various types. In various cases this problem is solved by means of the use of a "smart card". User introduces this card in a reader connected with a computer, in order to have access to his private key, when he wishes to open a protected transaction/communication. Besides this, "smart card" includes also a certificate that verifies identity of owner. This certificate is sent to partner together with a signed document. With this certificate the receiver can verify both digital signature on document, and sender identity. But problems connected with possible loss of this "smart card" are still open.

In the case of companies' networks, the transition to new technologies of networks is also more advanced than in public networks. In this framework the previous considerations connected to services personalization can be applied (to be considered both as access authorization to functions and data available in companies' information systems, and as possibility to manage personal data). Besides, in the general field of management of security, problems about control of logic and physical access to systems must be faced. For these last ones, use of biometric technologies is growing.

A specific requirement of companies networks is that of managing the security of personalized access to desktops, requirement which is at present met with introduction of access block (by means of screen savers protected by password), after periods of inactivity generally rather short. This method has the typical problems of systems based on passwords, and can also cause not negligible difficulties of use by users. The use of presence detection mechanisms could be a simpler and more efficient solution to this problem.

The use of "keys" provided with USB port is at present the method more used to manage personal data (of the order of hundreds of megabytes), for which an easy physical transportability and a high degree of security is required. These keys do not give any protection against loss or theft. Recently a great progress in the field of security has been obtained by the introduction of keys (Sony MicroVault) endowed with a biometric device capable of digital fingerprint detection, which can be therefore activated and read only by owner.

Integration of biometric sensors in palmar computers, for the purpose of binding access to device functions to a safe personal identification, has been carried out by HP in PDA iPAQ 5500, in which the main pushbutton that represents "enter" function includes a sensor capable of digital fingerprints identification.

Various solutions have been developed to bind physical presence of person to the access to particular functions or services, and to personalization of same ones. An important example is coming from automotive sector, where Renault supplies "keys" with a shape of a credit card provided with a radio tag (RFID) that are carried by car owner. In this way the presence of owner is noticed without that the owner must in any way manipulate the key, and this allows not only car opening by simply contacting the handle, but also the creation of a personal profile of driving seat (height of seat, position of mirrors, etc.).

In networking sector, personalization of security functions by means of use of a smart card has been realized, for example, by RSA Security. The RSA SecurlD is a card that allows to activate in a simple manner an end point of a Ipsec (IP security) tunnel, managing keys and digital certificates. In this way an user can safely transform a PC provided with a reader in the personal access point of a VPN (Virtual Private Network).

The report, accessible on site www.innova.it, with title M.Navazio: "Pocket digital wireless device for the personal information management and for the authentication of the communication and the information exchange with other digital devices" discloses integration in only one wireless device of functions of personal identification and profile management. In particular this report describes a wireless device provided with a SIM card for mobile communication, a Smart Id card for a protected and safe access to transactions, a chip Bluetooth (BT) - IEEE 802 15.1, a biometric fingerprint chip, a microprocessor and an area for storing software and memorization of personal information. This device may also be seen as a server of authentication of mobile network, which manages satellite devices as distributed customers.

Presence of a SIM card allows the device, in BT connection with a cellular telephone, to enable this last one to the use of a SIM, optimising and automating management of mobile phone for use of cards of various providers (one on the mobile phone and the other on device we are talking about) in order to reduce either costs of traffic or according to other personal criteria of selection of the provider. Report does not disclose a system that integrates RFID (Radio Frequency IDentification) technology and Zigbee-802.15.4 and does not provide a device, which can be inserted in a terminal, provided by a microprocessor.

Patent US 5,623,552 discloses a card of auto-identification with a fingerprint sensor for authentication of user identity. However system described does not integrate RFID (Radio Frequency IDentification) technology and Zigbee - 802.15.4 (www.zigbee.org/www.ieee802.org/15/pub/TG4.html).

Patent application US 2002/089410 discloses a device of biometric authentication that includes a module "fingerprint" interconnected and in communication with a palmar device (PDA, Personal Digital Assistant). However this device does not provide RFID and Zigbee technologies.

Both mentioned documents do not provide integration with USB keys.

### Description of invention.

Authors of present invention have worked out a system (called iPask) that allows carrying out personalization of a terminal and management of presence and mobility in a framework of an IP network, capable also of supporting services in real time, like voice and video. This system in its more complete embodiment, supports and integrates tightly four main aspects: personal identification supported by a biometric technology, presence recognition, that exploits technologies RFID and Zigbee, personal data management gathered in a protected memory (USB key and Card) and terminal personalization also for personal communications of voice or video type, carried out by means of an interaction with software systems of network management and connecting a Bluetooth earphone to terminal.

System solves reported problems of previous art because:
- it integrates terminal authentication, that can be carried out by means of cryptographic techniques, with a safe personal identification, carried out with biometric methods;
- it has a high degree of ergonomic qualities and suitable for wearing, owing to "wireless" technologies implementation.

Furthermore system of present invention is applicable to either public or private IP networks, and it allows with an advantage a further simplification of functions of a portable card, with elimination of the presence of a SIM card.

Furthermore the adding of a technology which is particularly apt to presence recognition support, like RFID, and Zigbee technology, characterized by a very low consumption, allows supporting protocol exchanges necessary for authentication.

Furthermore, division of functions between a USB key and a wireless card, eases capacity of integration with terminals also not provided with Bluetooth communication from an hardware point of view and it gives a function of a safe and personalized mass memory.

At the end, use of radio RFID and Zigbee technologies allows, by controlling transmission power, to decrease access to system only if person/key are really in the vicinity of terminal, thus avoiding not wished enables.

Division of functions and innovative integration of RFID and Zigbee technologies allow having a card with high ergonomic characteristics and easiness of use, especially in reference to the following three points:
- battery life is much higher, and it allows to go from an utilization model like that of a mobile cellular phone, that requires a regular recharge of batteries, to that of a remote control or a portable calculator, in which batteries can be replaced with a change time of at least months.
- card (or key) must not be continuously handled in order to confirm a safe identification by user: in particular card can be worn in a pocketbook or in any case without necessity to have its continuous immediate availability.
- card, especially in version without biometric sensor, may be thin as a smart card , and having therefore the same ergonomic specifications.

### Detailed description of the invention.

It is therefore within the scope of this invention a system that allows integration of personal identification, of recognition of presence, of management of personal data and of a personalization of a terminal for personal communications including at least:
a) a device, which can be inserted in the terminal, provided with a microprocessor including: a semiconductor memory for personal data and files, functions of radio communication and protocols which are in accordance with Zigbee/802.15.4 standard, functions of radio communication necessary to activate an RFID tag;
b) a card provided with a microprocessor including: a RFID tag, passive or semi-passive, a memory for sensitive data, functions of radio communication and protocols which are in accordance with standard Zigbee/802.15.4.

Preferably device is a USB key which can be inserted in a USB port, or as an option it is a card that can be directly inserted in the terminal.

In a preferred embodiment system also includes a biometric sensor integrated either in device or in card.

In a further preferred embodiment device includes also radio and protocol communication functions which are made according to Bluetooth standard, which, connected together with a Bluetooth microphone/earphone, allow the personalization of terminal for vocal communications.

It is also scope of invention a kit mainly made of components of system above described.

It is also scope of invention a method for user recognition and personalization of terminal for authenticated communications by means of a system according to invention including followings items:
a) user recognition, also by means of a digital fingerprint by means of a sensor located either on the device or on the card according to invention;
b) periodic emission of RFID pulses from either said device or said card to activate respectively either the card or the device, in which emission power of pulses is such that either said device or said card be activated only when they are found one near the other;
c) starting of messages exchange for a mutual authentication by using messages of Zigbee/802.15.4 protocol.

Preferably starting of messages exchange of a mutual authentication by using messages of Zigbee/802.15.4 protocol is carried out by means of three cryptographic protected messages in which ciphering key , in a first message exchange, is deduced from a starting secret code and first message, sent from card to device, includes a first "nonce n₁"; second message, a reply by device, includes first "nonce n₁", a second "nonce n₂" and a flag R that gives the necessity or not to renew cryptographic key; third message, sent from card, includes the second "nonce n₂" and checking of flag R.

Invention is now described in its embodiments as examples but not confined to these, by reference to these figures.
- Figure 1 that describes system configuration by means of a block diagram;
- Figure 2 that describes mechanism of message exchange for authentication.

### Structure of system iPask

System iPask is connected to a terminal, through which it is possible to access information and communication services which are characteristic of network we are dealing with. According to type of use, terminal can be a personal computer, a Set Top Box, a "residential gateway" an IP telephone or another device that integrates in various ways these functions.

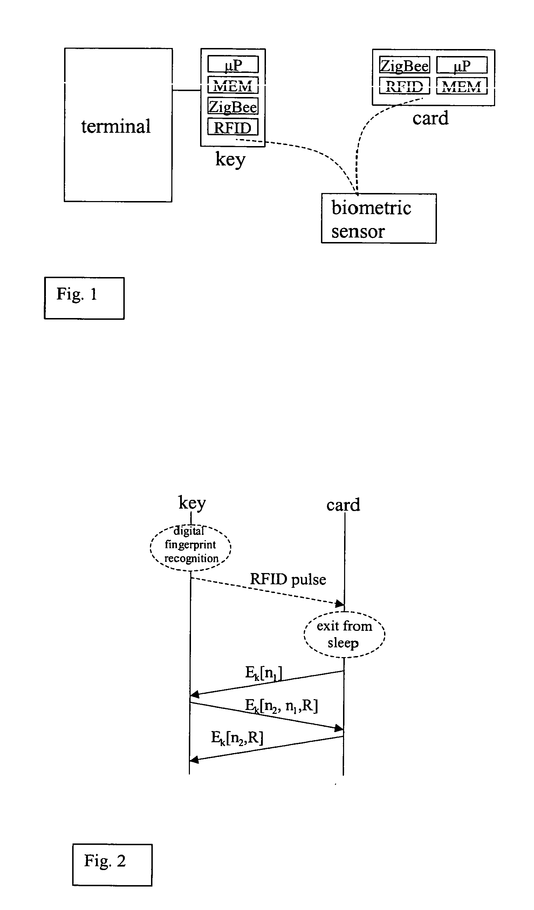

System includes, schematically drawn in Figure 1:
1) a key which can be inserted in a USB port of terminal provided with a microprocessor and including:
   - a semiconductor memory for personal data and files.
   - functions of protocol and radio communications according to standard Zigbee/802/15/4.
   - radio communication functions necessary to activate a RFID tag;
2) a card with a shape of a credit card, provided with a microprocessor and including;
   - a passive or semi-passive RFID tag,
   - a memory for sensitive data,
   - radio and protocol communications functions according to Zigbee/802.15.4 standard;
3) a biometric sensor integrated on key or on card
   (typically a digital fingerprint sensor)

Operation of system is based on principles of personal and presence authentication.

### Configuration

System must be configured at start by setting up a logic link between key and card, as an example based on a code inserted in the card during manufacturing and repeated in the key, and by initialising features of biometric specifications to recognise.

### Activation

Key becomes operative in the time when:
- it is connected to terminal (for example inserted in a USB port),
- it is activated owing to presence near the card (detected by means of RFID) and by a convenient input of subsystem of biometric recognition.

Card becomes operative in the time when:
- it is found near key connected with terminal,
- it takes place a convenient input of subsystem of biometric recognition.

### Operation Step

When system components are in operation, various application functions can be operated connected with card presence(and therefore of person that wears it) near the terminal; particularly application functions connected with authorization profile of person can be accessible (for instance access through network to reserved data) and functions connected with presence concept, as for example transfers of telephone calls on VoIP communication fluxes addressed to terminal. Besides, personal data memorized in key and in card are accessible.

Characteristic of operation step is presence of two ways of operation: key enables all application functions and tells the network about presence of person when card is near, or in other words it is detectable by RFID and a following exchange of messages of authentication through Zigbee, while it disables these functions, giving also non presence of person, when it does not detect proximity of card. At the time card returns near key, authentication is made automatically, without asking for a new activation step by means of digital fingerprint reading, and therefore without necessity for person to handle again card.

It is important to remark that foreseen application of RFID technology is very particular: tag is provided with its own power supply, and, as a matter of fact, it is not necessary that its own code be transmitted again, because subsequent step of authentication is passed to Zigbee functions. This mechanism of operation allows to use RFID technique up to distances of a few yards.

In the case that radio and protocol functions are also integrated in the key according to Bluetooth standard, in the operation step, and in the presence of the card (enabled functions) Bluetooth microphone/earphone is enabled to voice communication, and the unity of terminal and earphone behaves as an IP telephone. It will be possible, obviously, to enrich telephone functions with supplementary characteristics as for example a telephonic agenda that can be activated vocally.

### Deactivation

Deactivation of system takes it in a state where a new operation of activation is necessary (with a biometric recognition) in order to make it newly in operation. It is foreseen that system can be deactivated by one of the following ways:
- in case key is connected to a USB port, taking out key from port,
- lack of card presence in proximity for a time of a given length,
- full deactivation by a particular application item residing in terminal or by means of commands received through the telecommunication network.

### Ergonomic points of view and personalization of card

A very important point of the card , that has an influence on the way in which it is used, it is its ergonomic properties. Card has a shape of a credit card, thickness and weight very small and a long battery life (especially when biometric sensor is located in the key), which is possible owing to adoption of a standard as Zigbee. These characteristics make it an object easily "wearable", which can be carried together with other credit cards. Furthermore back side of card (opposite to side of biometric sensor) may be personalized in various ways, for example with a photo identity-card of owner, and it can have a bar code and/or a magnetic strip, and all this could ease interaction with other more elementary identification systems.

### Example of embodiment of iPasK system and relevant way of operation.

### Structure of system

Let us consider a configuration with a USB key, provided with a biometric sensor of a capacitive type for recognition of a digital fingerprint, connected with a PC. Card will be provided with a reduced ZigBee functionality (reduced functionality device).

Furthermore configuration does not provide connection of key to Bluetooth earphone.

### Configuration

Card includes a secret code inserted at manufacturing time; starting configuration of the key provides for insertion of relevant code and insertion of features of digital fingerprints through a training step. These operations are guided by a suitable starting program.

### First activation

Card is usually in a sleep mode with very low power consumption, mode from which it gets out after receiving a pulse from RFID circuit; following this event circuits of card are activated (semi-passive way of operation).

Activation procedure starts with owner recognition by means of a digital fingerprint thanks to sensor which is located on key. Following this key enters in a step of "hooking" of card, by means of a periodic emission of RFID pulses; periodicity of these pulses in research step is adjustable, and we suppose it is of the order of a few seconds.

Because activation procedure be successful, card must be in proximity of key; in this situation circuits of card get out of sleep mode and carry out an exchange of messages of mutual authentication by utilizing messages in Zigbee/802.15.4 protocol.

Mutual authentication has following development: three cryptographic protected messages are exchanged (at MAC frame level) according to standard specifications, which foresees use of AES algorithm. Key of ciphering, in this first messages exchange, is deduced from a secret starting code. First message, sent from card to key, includes a "nonce n₁"; reply message from key includes n₁, a second nonce n₂ and a flag R that indicates necessity or no necessity to renew cryptographic key; third message, sent again by card, includes n₂ and recognition of flag.

In this way, with first two messages key is authenticated in relation to card, and with third one the mutual authentication is fulfilled, thus guaranteeing real presence of card near the key. In case flag R is already set, a new cryptographic key is calculated on the base of "nonce": generally R is set in all started procedures with a biometric recognition, and not in periodic confirmations of operation state, but more severe procedures can be established according to application.

In order to make this protocol really robust to various attack attempts based on interposition it is necessary that "nonce" be renewed at every exchange and possibly that these include real casual elements (obviously second condition is a guarantee of first one). Furthermore exchange of messages must be fulfilled in a maximum time guaranteed by a timer. Figure 2 describes exchange of messages of authentication.

At the end of exchange of messages above described system enters its operation step, and card goes back to sleep mode.

### Operation step

As already said above, it is not part of innovation, identification of specific application functions which can be activated in operation step. In present example it is important, instead, to define modalities by which presence of card is verified.

Key, according to a periodicity that can be configured, which we suppose of a few minutes, emits RFID pulses that, if received by card, start a new procedure of mutual identification.

In case this procedure is activated and ends with success, system continues to operate in a operational step; in case of failure of procedure owing to card absence, system gets out of operational step (operation functions are disabled) and key gets into a research step, with a periodicity of RFID pulses intermediate between "hooking" step (which comes after biometric recognition) and verification step.

### Deactivation and reactivation

Possible causes of a system deactivation have been found out previously. When system is deactivated, it is necessary a new step of activation like that described previously. The only one, but important difference is that in successive activations to the first one it is used last cryptographic key dealt with in various procedures of mutual authentication, and not a key deduced directly from starting secret code.

### Reconfiguration

It is possible that owing to breakdowns or losses, a new logic link must be created between a different pair key/card. In this case, it is available in hardware a reset function that allows to formulate starting parameters and to carry out a new starting configuration.

### Other embodiments of iPasK system.

The main alternative embodiment provides location of biometric sensor on card. In this way, we have a system in which all characterization elements are integrated in card, and it is possible to exploit functions that could be already present at starting point in future generation of terminals. Way of operation of system changes only a little with reference to what previously described, with the only difference that presence of recognizing element in card makes it more acceptable an interaction procedure with a greater frequency of biometric authentications, procedure in itself safer.

An other possible embodiment provides for an important functional enrichment of the card, that is provided with a display with a low power consumption, a digital clock and a few pushbuttons, that allow to carry out simple interactions (of point and click type) with applications housed in terminal.

A different option is a minimal function that does not provide for validation of card-person association through a digital fingerprint; instead of biometric authentication an introduction of a PIN can be used during activation step. This PIN can be produced by a suitable system that exploits a biometric recognition for PIN generation (we are sure that no other person has arrived to know the same one because code is created and given only at this time). This configuration allows to manage presence and personalization of services that can be accessed from terminal, however with a smaller security level and a smaller ergonomic characteristic.

### Applications

The system may be used for every application selected by an expert of this field, among which:
- system of personalization of terminal, control of accesses and management of presence to be supplied together with an IP central unit or with a IP Centrex system (an example could be solution IP Centrex carried out by iMSS platform of Italtel);
- system of terminal personalization (PC or TV set top box, telephones, video-telephones, voice gateway) and management of personal mobility for residential users, to be developed within the framework of an offer for functionality of an integrated public network (like those supported by Virtual Line service by IMSS platform of Italtel);
- system of purchase/access to communication services from a public telephone unit(evolution of Public telephony services). An example could be Multimedia Information Point solution of iMSS platform of Italtel;

Generally speaking other applications can be found within
- access services including contents (example, IP TV on STB)
- home/office control services
- PP.AA services for citizens

## Claims

1. System that allows integration of personal identification, of presence detection, of management of personal data and of personalization of a terminal including at least:
a) a device that can be inserted in terminal, provided with a microprocessor including: a semiconductor memory for data and personal files, functions of radio and protocol communication according to Zigbee/802.15.4 standard, functions of radio communications necessary to activate a RFID tag;
b) a card provided with a microprocessor including: a passive or semi-passive RFID tag, a memory for sensitive data, functions of radio and protocol communication according to Zigbee/802.15.4 standard

2. System according to claim 1 in which device is a USB key that can be inserted in a USB port.

3. System according to claim 1 in which device is a card which can be directly inserted in terminal.

4. System according to one of above given claims further including a biometric sensor integrated in device or in card.

5. System according to one of above given claims further including functions of radio and protocol communication according to Bluetooth standard integrated in device or in card.

6. System according to claim 5 including a Bluetooth microphone/earphone.

7. A kit that allows integration of personal identification, of presence detection, of management of personal data and of personalization of a terminal for personal communications including at least:
a) a device, which can be inserted in terminal, provided with a microprocessor including: a semiconductor memory for personal files and data, functions of radio and protocol communications according to standard Zigbee/802.15.4, functions of radio communication necessary to activate a RFID tag;
b) a card, provided with a microprocessor including: a passive or semi-passive RFID tag, a memory for sensitive data, radio and protocol communication functions, according to Zigbee/802.15.4 standard.

8. A kit according to claim 7 in which device is a USB key which can be inserted in a USB port.

9. A kit according to claim 7 in which device is a card which can be directly inserted in terminal.

10. A kit according to one of claims from 7 to 9 further including a biometric sensor integrated in device or in card.

11. A kit according to one of claims from 7 to 10 further including functions of radio and protocol communication according to Bluetooth standard integrated in device and in card.

12. A kit according to claim 11 including a Bluetooth microphone/earphone.

13. Procedure to recognize a user and terminal personalization for communications authenticated by means of a system according to claim 1 including the following points
a) recognition of user, also by means of a digital fingerprint by means of a sensor located on device or on card according to claim 7;
b) periodic emission of RFID pulses from said device or said card in order to activate respectively card or device, in which power of pulse emission is such as to activate said device or said card only in case they are in proximity of one to the other;
c) starting of exchange of messages of mutual authentication by using messages with Zigbee/802.15.4 protocol.

14. Procedure according to claim 13 in which starting of an exchange of messages of mutual authentication, by using messages of Zigbee/802.15.4 protocol, is carried out by means of three messages cryptographically protected in which ciphering key, in a first exchange of messages, is deduced from a secret starting code and first message, sent from card to device, includes a first "nonce n₁"; second message, a reply from device, includes first "nonce n₁", a second "nonce n₂" and a flag R that gives necessity or no necessity to renew cryptographic key; the third message, sent from card, includes the second "nonce n₂" and recognition of flag R.
